# EUROPÄISCHE PATENTSCHRIFT

(11) **EP 0 717 214 B1**
(45) Veröffentlichungstag und Bekanntmachung des Hinweises auf die Patenterteilung: **29.12.1999**
(21) Anmeldenummer: 95115829.4
(22) Anmeldetag: 07.10.1995
(51) Int. Cl.: F16D 65/12

(54) **Bremsscheibe für Scheibenbremsen**
Brake disc for disc brakes
Disque de frein pour freins à disque

(30) Priorität: 17.12.1994 DE 4445226
(43) Veröffentlichungstag der Anmeldung: 19.06.1996
(73) Patentinhaber: Dr.Ing.h.c. F. Porsche Aktiengesellschaft, 70435 Stuttgart (DE)
(72) Erfinder: Martin, Roland, D-71287 Weissach (DE)

(56) Entgegenhaltungen:
- EP-A- 0 318 687
- FR-A- 2 225 654
- GB-A- 2 228 053
- US-A- 4 742 948
- PATENT ABSTRACTS OF JAPAN vol. 17 no. 26 (M-1354) & JP-A-04 249627 (SUMITOMO)

## Beschreibung

Die Erfindung bezieht sich auf eine Bremsscheibe für Scheibenbremsen nach dem Oberbegriff des Anspruches 1.

Aus der DE 32 24 192 A1 ist eine Bremsscheibe aus einem Kohlenstoffmaterial bekannt, die keine Innenbelüftung besitzt. Des weiteren ist aus der EP 0 374 158 B1 ein Verfahren zur Herstellung eines Gegenstandes, wie beispielsweise einer Bremsscheibe aus einem Kohlenstoffwerkstoff bekannt. Diese nicht innenbelüftete Bremsscheibe weist in der Scheibe durchgehende Öffnungen auf, die beim Substrat während des Webens erzeugt werden.

Die GB-A 2 228 053 zeigt eine mehrteilig aufgebaute Bremsscheibe, bei der an einem metallischen Topf ein metallischer Träger mit aufgesetzten Reibbelägen aus einem Carbon-Werkstoff durch lösbare Befestigungsmittel gehalten ist. Die Befestigungsmittel verbinden dabei beide reibbeläge un den metallischen Träger mit dem Topf der Bremscheibe. Hiermit soll das Auswechseln der Reibflächen im Falle von Abnutzung oder Beschädigung zu erleichtert werden.

Aufgabe der Erfindung ist es, eine Bremsscheibe aus einem Kohlenstoff bzw. einem kohlenstoffaserverstärkten Werkstoff herzustellen, die einfach herstellbar ist und eine technische Gestaltungsfreiheit, insbesondere hinsichtlich der Kanäle und der Ausbildung der Reibscheiben gewährleistet.

Diese Aufgabe wird erfindungsgemäß durch die kennzeichnenden Merkmale des Anspruch 1 gelöst. Weitere vorteilhafte Merkmale beinhalten die Unteransprüche.

Die mit der Erfindung hauptsächlich erzielten Vorteile bestehen darin, daß eine innenbelüftete Bremsscheibe mit radialen Luftkanälen mehrteilig aus einem Kohlenstoff bzw. einem kohlenstoffaserverstärktem Material herstellbar ist und die einzelnen Bauteile der Bremsscheibe über ein geeignetes Verbindungsverfahren, wie beispielsweise einer Hochtemperaturlötung oder einem Klebeverfahren, direkt miteinander verbindbar ist.

Es ist somit eine einzelne Herstellung der beiden Reibringe, des Topfes und der Rippen möglich, deren Gestaltung hierdurch frei wählbar ist.

Auch kann der Topf mit einem Reibring als einteiliges Bauteil zusammen in eine Form gepresst werden. Der Topf kann mit dem Reibring auch über Schrauben und Verbindungselemente verbunden sein.

Mit einem Reibring können auch die radialen Rippen zur Bildung von Luftkanälen als einteiliges Bauteil hergestellt werden.

Des weiteren bietet die erfindungsgemäße Ausführung den Vorteil, daß die radialen Kanäle aufgrund der offenen Herstellungsweise eine solche Form und einen derartigen Querschnitt mit radialem Verlauf aufweisen, welcher bei einer geschlossenen Herstellung, beispielsweise in einem Gußverfahren, nicht in einfacher Weiste möglich ist. So können auch zwischen den radialen Rippen an jeder Reibscheibe Halbrippen angeordnet werden.

Bei einer Herstellung der radialen Rippen separat zu den Reibringen können diese in eingeformten Nuten in Innenflächen der Reibringe eingesetzt und in diesen unlösbar befestigt werden, so daß die beiden Reibringe zur Bildung der Bremsschreibe miteinander verbunden sind.

Auch ist es möglich, die Bremsscheibe hälftig so herzustellen, daß jeweils an einem Reibring die radialen Rippen mit halber Wandbreite angeformt sind. Eine Verbindung der Reibringe erfolgt dann über die Stirnfläche der Rippen, die hierzu entsprechend ausgebildet sein können.

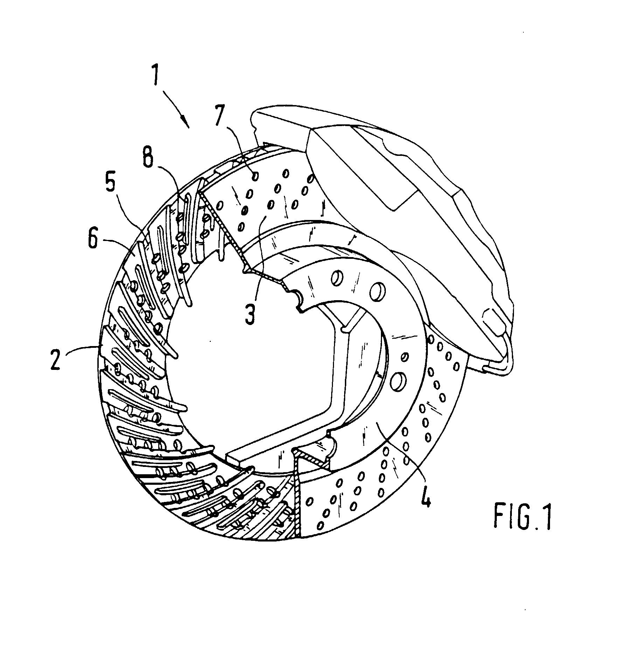

Ausführungsbeispiele der Erfindung sind in der Zeichnung dargestellt und werden im folgenden näher beschrieben. Es zeigen
- Fig. 1: eine schaubildliche Darstellung einer innenbelüfteten Bremsscheibe aus einem Kohlenstoff-Material,

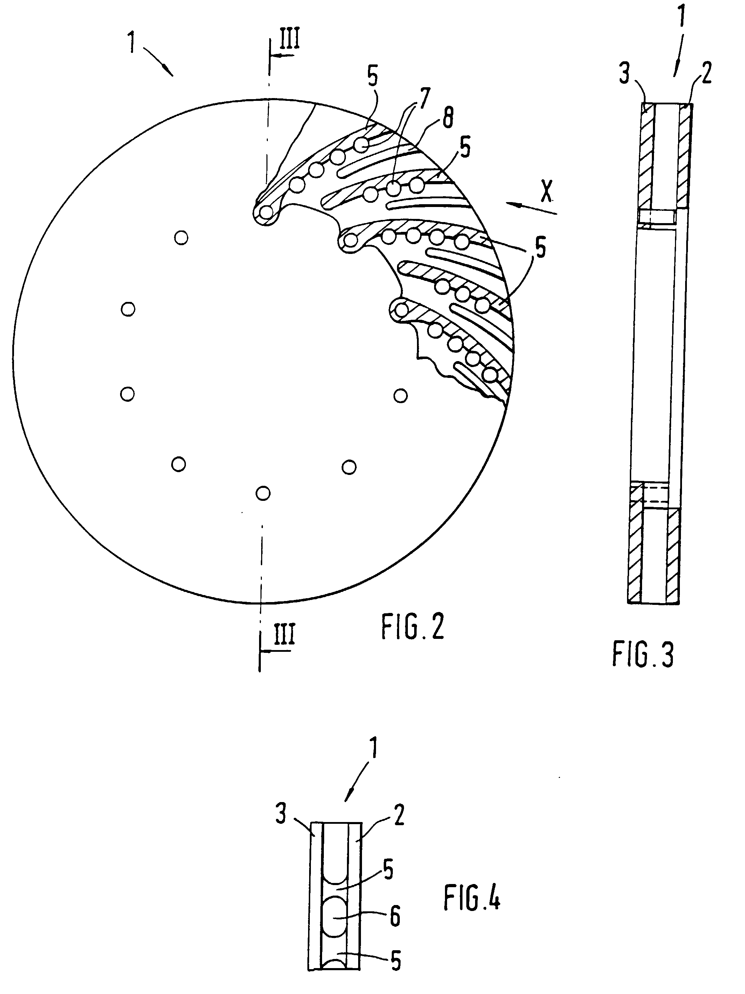

- Fig. 2: eine Draufsicht auf einen Reibring der Bremsscheibe mit radialen Rippen und Halbrippen und Bohrungen,
- Fig. 3: einen Schnitt nach der Linie III-III der Fig. 2 durch eine Bremsscheibe,
- Fig. 4: eine Ansicht in Pfeilrichtung X, in die Luftkanäle gesehen,
- Fig. 5: eine schematische Darstellung der Bremsscheibe, bestehend aus einzeln hergestelltem Topf, Reibringen und radialen Rippen,
- Fig. 6: eine schematische Darstellung der Bremsscheibe, bestehend aus einteilig hergestelltem Topf mit Reibring und radialen Rippen,
- Fig. 7: eine schematische Darstellung der Bremsscheibe, bestehend aus einzeln hergestelltem Topf und Reibringen, die jeweils eine hälftige radiale Rippe tragen und
- Fig. 8: eine Schnittdarstellung über eine Anordnung einer radialen Rippe in einer Nut des Reibringes,
- Fig. 9 u.10: eine Vorder- und Seitenansicht auf Reibringe der Bremsscheibe, wobei mindestens einer der Reibringe über eine Schraubverbindung mit dem Topf verbunden ist,
- Fig.10 u.11: eine Vorder- und Seitenansicht auf die Reibringe der Bremsscheibe. bei der wenigstens ein Reibring mit den angeformten radialen Rippen über eine Schraubverbindung befestigt ist und
- Fig.12 u.13: eine Vorder- und Seitenansicht auf die Reibringe der Bremsscheibe, bei der der Topf lediglich über die Rippen mit der Bremsscheibe verbunden ist.

Eine innenbelüftete Bremsscheibe 1 aus einm kohlenstoffaserverstärktem Material umfaßt im wesentlichen zwei Reibringe 2 und 3 sowie einen Topf 4. Die Reibringe 2, 3 sind über radiale Rippen 5 miteinander verbunden, die Luftkanäle 6 zur Kühlung der Scheibe 1 bilden. In den Reibringen 2, 3 sind durchgehende Bohrungen 7 in verschiedenen Anordnungen vorgesehen. Des weiteren können Halbrippen 8 zwischen den radialen Rippen 5 angeordnet sein, die sich in Luftkanälen 6 mit einem Freiraum gegenüberstehen.

Die Herstellung der Bremsscheibe 1 erfolgt im wesentlichen aus zwei in Formen einzeln hergestellten Reibringen 2 und 3, die über ein geeignetes Verfahren, wie beispielsweise einer Hochtemperaturlötung oder eine Klebung miteinander verbunden werden.

Es sind aufgrund der Möglichkeit der einzeln herzustellenden Teile der Bremsscheibe 1 verschiedene Variationen in der Herstellung möglich.

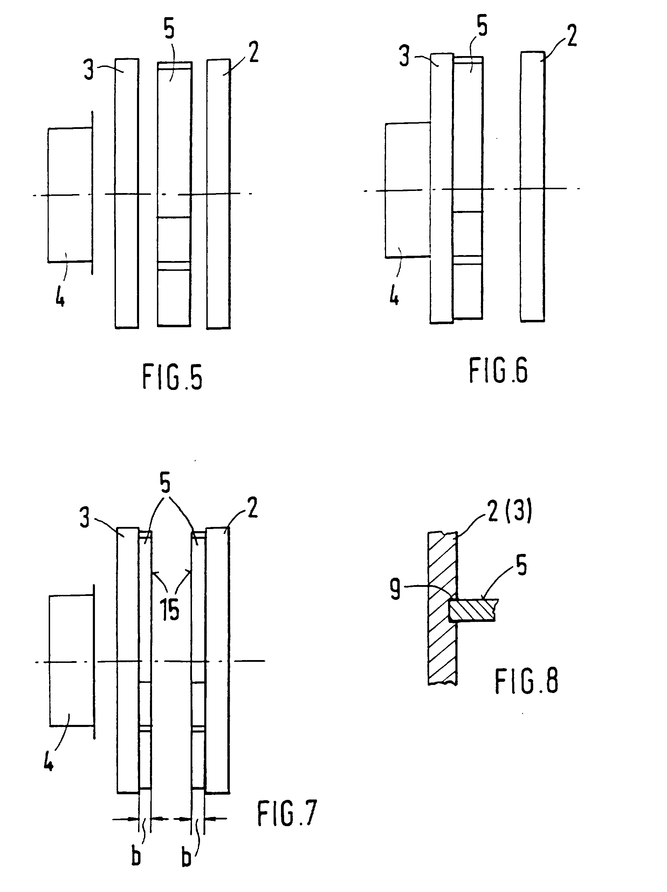

So können alle Teile der Bremsscheibe 1 einzeln hergestellt werden, d.h. der Topf 4, die beiden Reibringe 2, 3 und die radialen Rippen 5, wie Fig. 5 zeigt. Wenn es zweckdienlich erscheint, kann die eine Reibscheibe 3 zusammen mit dem Topf 4 gepreßt werden, wie Fig. 6 zeigt. Des weiteren können die Rippen 5 entweder mit der Reibscheibe 2 oder 3 zusammen hergestellt werden.

Bei einer Einzelherstellung der Rippen 5 können diese entweder stumpf mit den Flächen der Reibringe 2, 3 verbunden werden oder es sind auch entsprechend den radialen Rippen 5 verlaufende Nuten 9 in den Reibringen 2 und 3 bzw. 2 oder 3 möglich, wie Fig. 8 näher zeigt.

Nach einer weiteren Ausführung der Erfindung ist es auch möglich, die radialen Rippen 5, wie Fig. 7 näher zeigt jeweils hälftig mit den Reibscheiben 2 und 3 in einer Form herzustellen. Eine Verbindung der Reibscheiben 2, 3 erfolgt dann über die Stirnflächen der Rippen, die hierzu plan ausgeführt sein können, oder aber eine besondere Formgestaltung aufweisen.

Die zwischen den radialen Rippen 5 vorgesehenen Halbrippen 8 sind in einem Herstellungsvorgang mit den Reibscheiben 2, 3 herstellbar.

Nach Fertigstellung der Bremsscheibe 1 können je nach Bedarf die durchgehenden Bohrungen 7 eingebracht werden.

Aufgrund der zwei- oder mehrteiligen Herstellungsweise der Bremsscheibe 1 aus einem kohlenstoff-faserverstärktem Material ist eine Kanalform der Luftkanäle weitestgehend frei gestaltbar.

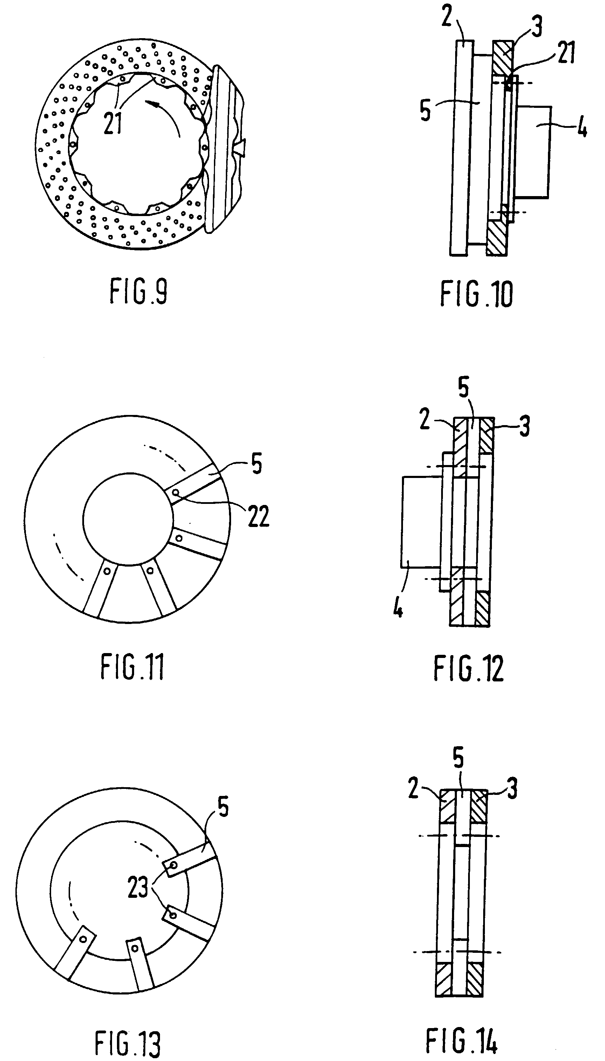

Wie in den Fig. 9 und 10 näher dargestellt, kann der eine Reibring 2 oder 3 mit dem Topf 4 über Schrauben verbunden werden. Der andere Reibring 2 wird dann mit den radialen Rippen 5 einteilig ausgebildet und über eine Lötung oder Klebung mit dem Reibring 3 verbunden werden. Zur Befestigung des Reibringes 3 mit dem Topf 4 weist der Reibring 3 vorstehende Laschen 21 auf. In den Fig. 11 und 12 erfolgt die Befestigung des Topfes 4 mit der Bremsscheibe 1 über Schrauben, die in Bohrungen 22 der Rippen 5 und des einen Reibringes 2 oder 3 angeordnet sind. Eine Befestigung kann auch über die beiden Reibringe 2, 3 und die Rippe 5 erfolgen.

In den Fig. 13 und 14 erfolgt die Befestigung des Topfes 4 mit den Reibringen 2, 3 der Bremsscheibe 1 über die Rippen 5, welche hierzu jeweils eine Bohrung 23 aufweisen, durch die die Schraubbolzen gesteckt werden.

## Patentansprüche

1. Bremsscheibe für eine Scheibenbremse von Fahrzeugen, wobei die Bremsscheibe aus einem Werkstoff der Gruppe der Kohlenstoffe besteht, **dadurch gekennzeichnet**, daß die Bremsscheibe (1) als innenbelüftete Bremsscheibe aus zwei einzeln herstellbaren Reibringen (2, 3) besteht, die unlösbar direkt miteinander verbunden sind.

2. Bremsscheibe nach Anspruch 1, **dadurch gekennzeichnet**, daß der eine Reibring (3) der Bremsscheibe (1) zusammen mit einem Topf (4) als Einzelbauteil in einer Form herstellbar ist.

3. Bremsscheibe nach Anspruch 1 oder 2, **dadurch gekennzeichnet**, daß die beiden Reibringe (2, 3) der Bremsscheibe (1) sowie zwischen diesen angeordnete radiale Rippen (5) von Luftkanälen (6) einzeln herstellbar sind.

4. Bremsscheibe nach Anspruch 1 oder einem der vorhergehenden Ansprüche, **dadurch gekennzeichnet**, daß die einzeln hergestellten Teile der Bremsscheibe (1) über eine Hochtemperatur-Lötung miteinander zu einer Bremsscheibe (1) verbindbar sind.

5. Bremsscheibe nach den Ansprüchen 1 bis 3, **dadurch gekennzeichnet**, daß die einzeln hergestellten Teile der Bremsscheibe über eine Klebung miteinander zu einer Bremsscheibe (1) verbindbar sind.

6. Bremsscheibe nach Anspruch 1 oder einem der vorhergehenden Ansprüche, **dadurch gekennzeichnet**, daß die beiden Reibringe (2, 3) innenseitig radiale Rippen sowie zwischen den radialen Rippen (5) angeordnete Halbrippen (8) aufweisen.

7. Bremsscheibe nach Anspruch 6, **dadurch gekennzeichnet**, daß die Halbrippen (8) an jeder Innenseite der Reibringe (2, 3) gegenüberstehend mit einem Freiraum angeordnet sind.

8. Bremsscheibe nach Anspruch 3, 6 oder 7, **dadurch gekennzeichnet**, daß die radialen Rippen (5) in korrespondierenden Nuten (9) an mindestens einer Innenfläche der Reibinge (2, 3) gehalten und in diesen über eine Verbindung unlösbar festsetzbar sind.

9. Bremsscheibe nach Anspruch 1 oder einem der vorhergehenden Ansprüche, **dadurch gekennzeichnet**, daß die beiden Reibringe (2, 3) der Bremsscheibe (1) jeweils mit radialen Rippen (5) halber Wandbreite (b) herstellbar sind und die Reibringe (2, 3) über die stirnseitigen Rippenflächen jeweils miteinander unlösbar verbunden sind.

10. Bremsscheibe nach Anspruch 1 oder einem der vorhergehenden Ansprüche, **dadurch gekennzeichnet**, daß zwischen den Reibringen (2, 3) Luftkanäle (6) vorgesehen sind und daß die Reibringe (2, 3) im Bereich der Luftkanäle (6) durchgehende Bohrungen (7) aufweisen, die nach Fertigstellung der Bremsscheibe (1) einbringbar sind.

11. Bremsscheibe nach einem der Ansprüche 3 bis 10, **dadurch gekennzeichnet**, daß eine Verbindung eines Topfes (4) mit einem oder beiden Reibringen (2, 3) über Schrauben erfolgt und die Reibringe (2, 3) mit den Rippen (5) über die unlösbare Verbindung miteinander verbunden sind.

12. Bremsscheibe nach einem der Ansprüche 3 bis 10, **dadurch gekennzeichnet**, daß die Verbindung eines Topfes (4) mit mindestens einem Reibring (2 oder 3) und den Rippen (5) über Schrauben erfolgt, die jeweils in Bohrungen (22) der Rippen (5) und Bohrungen des Reibringes angeordnet sind und die Reibringe (2, 3) und die Rippen (5) über die unlösbare Verbindung miteinander verbunden sind.

13. Bremsscheibe nach einem der Ansprüche 11 oder 12, **dadurch gekennzeichnet**, daß die Verbindung des Topfes (4) mit der Bremsscheibe (1) nur über die Rippen (5) erfolgt und die Verbindung der Reibringe (2, 3) und/oder der Rippen (5) über die unlösbare Verbindung miteinander erfolgt.

## Claims

1. A brake disc for a disc brake of vehicles, wherein the brake disc consists of a material of the carbon group, **characterized in that** the brake disc (1) in the form of an internally ventilated brake disc comprises two friction rings (2, 3) producible individually and directly connected to each other in an undetachable manner.

2. A brake disc according to Claim 1, **characterized in that** one friction ring (3) of the brake disc (1) is producible together with a cup (4) as an individual component in a mould.

3. A brake disc according to Claim 1 or 2, **characterized in that** the two friction rings (2, 3) of the brake disc (1) as well as radial ribs (5) of air ducts (6) arranged therebetween are producible individually.

4. A brake disc according to Claim 1 or one of the preceding Claims, **characterized in that** the individually producible parts of the brake disc (1) can be connected to one another by way of a high-temperature soldering to form a brake disc (1).

5. A brake disc according to Claims 1 to 3, **characterized in that** the individually producible parts of the brake disc can be connected to one another by way of an adhesive join to form a brake disc (1).

6. A brake disc according to Claim 1 or one of the preceding Claims, **characterized in that** the two friction rings (2, 3) are provided on the inside with radial ribs as well as half ribs (8) arranged between the radial ribs (5).

7. A brake disc according to Claim 6, **characterized in that** the half ribs (8) are arranged in an opposed manner with a free space on each inner side of the friction rings (2, 3).

8. A brake disc according to Claim 3, 6 or 7, **characterized in that** the radial ribs (5) are held in corresponding grooves (9) on at least one inner face of the friction rings (2, 3) and can be secured in the said friction rings (2, 3) by way of a connexion in an undetachable manner.

9. A brake disc according to Claim 1 or one of the preceding Claims, **characterized in that** the two friction rings (2, 3) of the brake disc (1) are producible in each case with radial ribs (5) of a half wall width (b), and the friction rings (2, 3) are connected to each other respectively in an undetachable manner by way of the front rib faces.

10. A brake disc according to Claim 1 or one of the preceding Claims, **characterized in that** air ducts (6) are provided between the friction rings (2, 3), and the friction rings (2, 3) are provided in the region of the air ducts (6) with continuous bores (7) which can be formed after the brake disc (1) has been finished.

11. A brake disc according to one of Claims 3 to 10, **characterized in that** a cup (4) is connected to one or both friction rings (2, 3) by way of bolts, and the friction rings (2, 3) with the ribs (5) are connected to each other by way of the undetachable connexion.

12. A brake disc according to one of Claims 3 to 10, **characterized in that** a cup (4) is connected to at least one friction ring (2 or 3) and the ribs (5) by way of bolts arranged respectively in bores (22) in the ribs (5) and bores in the friction ring, and the friction rings (2, 3) and the ribs (5) are connected to one another by way of the undetachable connexion.

13. A brake disc according to one of Claims 11 and 12, **characterized in that** the cup (4) is connected to the brake disc (1) only by way of the ribs (5), and the friction rings (2, 3) and/or the ribs (5) are connected to one another by way of the undetachable connexion.

## Revendications

1. Disque de frein pour frein à disques de véhicules automobiles, le disque de frein étant constitué en un matériau du groupe des carbones, caractérisé en ce que le disque de frein (1) est constitué, en tant que disque de frein ventilé de l'intérieur, de deux anneaux de friction (2, 3) pouvant être fabriqués individuellement, qui sont directement reliés entre eux de manière permanente.

2. Disque de frein selon la revendication 1, caractérisé en ce qu'un anneau de friction (3) du disque de frein (1) peut être fabriqué dans un moule avec un pot (4) en tant que pièce détachée.

3. Disque de frein selon la revendication 1 ou 2, caractérisé en ce que les deux anneaux de friction (2, 3) du disque de frein (1) ainsi que des nervures radiales (5), qui sont disposées entre eux, de canaux d'aération (6) peuvent être fabriqués individuellement.

4. Disque de frein selon la revendication 1 ou l'une des revendications précédentes, caractérisé en ce que les parties fabriquées individuellement du disque de frein (1) peuvent être assemblées entre elles en un disque de frein (1), par brasage haute température.

5. Disque de frein selon les revendications 1 à 3, caractérisé en ce que les parties fabriquées individuellement du disque de frein peuvent être assemblées entre elles en un disque de frein (1), par collage.

6. Disque de frein selon la revendication 1 ou l'une des revendications précédentes, caractérisé en ce que les deux anneaux de friction (2, 3) présentent sur leur face intérieure des nervures radiales ainsi que des semi-nervures (8) disposées entre les nervures radiales (5).

7. Disque de frein selon la revendication 6, caractérisé en ce que les semi-nervures (8) sont disposées en vis-à-vis sur chaque face intérieure des anneaux de friction (2, 3) avec un espace libre.

8. Disque de frein selon la revendications 3, 6 ou 7, caractérisé en ce que les nervures radiales (5) sont maintenues dans des nervures (9) correspondantes sur au moins une surface intérieure des anneaux de friction (2, 3) et peuvent être fixées dans celles-ci de manière permanente par une liaison.

9. Disque de frein selon la revendication 1 ou l'une des revendications précédentes, caractérisé en ce que les deux anneaux de friction (2, 3) du disque de frein (1) peuvent être fabriqués chacun avec des nervures radiales (5) d'une demi-largeur (b) de paroi et les anneaux de friction (2, 3) sont reliés entre eux de manière permanente par les surfaces de nervures frontales respectives.

10. Disque de frein selon la revendication 1 ou l'une des revendications précédentes, caractérisé en ce que des canaux d'aération (6) sont prévus entre les anneaux de friction (2, 3) et en ce que les anneaux de friction (2, 3) présentent, dans la zone des canaux d'aération (6), des trous traversants (7) qui peuvent être pratiqués après finition du disque de frein (1).

11. Disque de frein selon l'une des revendications 3 à 10, caractérisé en ce que la liaison d'un pot (4) avec l'un ou les deux anneaux de friction (2, 3) s'effectue par des vis et les anneaux de friction (2, 3) avec les nervures (5) sont reliés entre eux par la liaison permanente.

12. Disque de frein selon l'une des revendications 3 à 10, caractérisé en ce que la liaison d'un pot (4) avec au moins un anneau de friction (2 ou 3) et les nervures (5) s'effectue par des vis qui sont disposées chacune dans des perçages (22) des nervures (5) et dans des perçages de l'anneau de friction et en ce que les anneaux de friction (2, 3) ainsi que les nervures (5) sont reliés entre eux par la liaison permanente.

13. Disque de frein selon l'une des revendications 11 ou 12, caractérisé en ce que la liaison du pot (4) avec le disque de frein (1) ne s'effectue que par les nervures (5) et la liaison des anneaux de friction (2, 3) et/ou des nervures (5) entre eux s'effectue par la liaison permanente.
